# EUROPÄISCHE PATENTANMELDUNG

(11) **EP 0 878 889 A2**
(43) Veröffentlichungstag der Anmeldung: **18.11.1998**
(21) Anmeldenummer: 98108283.7
(22) Anmeldetag: 07.05.1998
(51) Int. Cl.: H02J 7/14

(54) **Elektrische Versorgungseinrichtung für ein militärisches Fahrzeug, insbesondere für einen mit einem Turm versehenen Panzer**

(30) Priorität: 16.05.1997 DE 19720816
(71) Anmelder: Wegmann & Co. GmbH, D-34127 Kassel (DE)
(72) Erfinder: Theiss, Georg, 34630 Gilserberg (DE); Schäfer, Jörg, 37281 Wanfried (DE)
(74) Vertreter: Feder, Wolf-Dietrich, Dr. Dipl.-Phys.

(57) **Zusammenfassung**

Eine elektrische Energieversorgungseinrichtung für ein Kampffahrzeug, insbesondere für einen mit einem Turm versehenen Panzer. Das Fahrzeug besitzt einen Generator (1), der vom Fahrzeugtriebwerk angetrieben wird und zur Versorgung des Bordnetzes und zur Aufladung der Batterien dient. Es sind zwei Batteriesätze (2, 3) vorhanden, von denen ein erster (2) dem Grobnetz (GN) und ein zweiter (3) dem Feinnetz (FN) zugeordnet ist. Damit beim Starten des Fahrzeugtriebwerks kein unerlaubter Spannungsabfall an empflindlichen Geräten auftritt, wird mittels einer Steuereinrichtung (4) heim Starten der zweite Batteriesatz (3) vom ersten Batteriesatz (2) über einen Trennschalter (6) derart abgetrennt, daß der Startvorgang allein aus dem ersten Batteriesatz (2) bewirkt wird. Gleichzeitig kann bewirkt werden, daß Grobnetz (GN) und Feinnetz (FN) während des Startvorgangs nur aus dem zweiten Batteriesatz (3) mit elektrischer Energie versorgt werden. Es kann weiterhin ein von einer zusätzlichen Antriebseinheit (12), beispielsweise einem Dieselmotor angetriebener Zusatzgenerator (11) vorgesehen sein, durch den im Standbetrieb des Fahrzeugs bei abgeschaltetem Fahrzeugtriebwerk das Bordnetz mit elektrischer Energie versorgt wird und die Batterien aufgeladen werden.

## Beschreibung

Die Erfindung betrifft eine elektrische Energieversorgungseinrichtung für ein militärisches Fahrzeug, insbesondere für einen mit einem Turm versehenen Panzer, mit den Merkmalen aus dem Oberbegriff des Patentanspruchs 1.

Die zur Zeit in Kampffahrzeugen verwendeten Energieversorgungseinrichtungen sind in verschiedenartigsten Varianten als Gleichspannungs-/Wechselspannungsnetze ausgelegt, wobei im allgemeinen ein Grobnetz für höhere Strombelastung von beispielsweise bis zu 500A vorhanden ist, an welches Verbraucher mit höherer Stromaufnahme angeschlossen sind, sowie ein Feinnetz für geringere Strombelastung von beispielsweise bis zu 100A, an das sensiblere Verbraucher mit einer geringeren Stromaufnahme angeschlossen sind.

Der Ladebetrieb des bekannten Bordnetzes wird bei laufendem Fahrzeugtriebwerk von einem Generator aus parallel zu den elektrische Energie verbrauchenden Geräten durchgeführt. Jedoch können die Energieverbraucher auch bei abgeschaltetem Fahrzeugtriebwerk über den Batteriesatz bzw. die Batteriesätze betrieben werden. Hierbei tritt das Problem auf, daß, wenn während des Betriebszustandes "Energieversorgung aus den Batteriesätzen" das Fahrzeugtriebwerk gestartet wird und damit die Batteriesätze sehr stark belastet werden, die Spannung auf dem Bordnetz auf unerlaubte Spannungswerte (<18V) absinkt. Infolge dieses Spannungsabfalls schalten einzelne Verbraucher ab und müssen nach Rückkehr in den definierten Bordspannungsbereich (18V bis 32V Gleichspannung) wieder über ihre festgelegte Start-up-Routine hochgefahren werden. Die hierfür benötigten Zeiten sind jedoch in der Praxis für spezifische Anwendungsfälle nicht tolerierbar.

Der Erfindung liegt die Aufgabe zugrunde, eine elektrische Energieversorgungseinrichtung der im Oberbegriff des Patentanspruchs 1 angegebenen Art so auszugestalten, daß beim Start des Fahrzeugtriebwerks kein Abschalten von Verbrauchern aufgrund eines zu großen Spannungsabfalls stattfinden muß. Weiterhin sollte die elektrische Energieversorgungseinrichtung so erweiterbar sein, daß auch bei abgeschaltetem Fahrzeugtriebwerk über längere Zeit sowohl an das Feinnetz als auch an das Grobnetz angeschlossene Verbraucher längere Zeit eingeschaltet sein können. Die Lösung dieser Aufgabe erfolgt grundsätzlich mit den Merkmalen aus dem kennzeichnenden Teil des Patentanspruchs 1. Vorteilhafte Weiterbildungen der Erfindung sind in den abhängigen Ansprüchen beschrieben.

So kann insbesondere die elektrische Energieversorgungseinrichtung gemäß Anspruch 5 durch einen Zusatzgenerator, der von einer zusätzlichen Antriebseinheit angetrieben wird, erweitert werden, was zur Folge hat, daß verschiedene Verbraucher, beispielsweise eine Kühlanlage über längere Zeit betrieben werden können, ohne daß eine zu starke Belastung der Batteriesätze befürchtet werden muß. Die erfindungsgemäße elektrische Energieversorgungseinrichtung, die ein neues Energieversorgungskonzept beinhaltet, ist mit besonderem Vorteil einsetzbar bei mit einem Turm versehenen Panzern, und zwar sowohl bei Kampfpanzern als auch bei Panzern für andere Einsatzzwecke. In modernen derzeit aktuellen Einsatzfällen werden Panzer häufig für stationäre Sicherungsaufgaben eingesetzt, bei der eine ganze Reihe von Verbrauchern elektrischer Energie eingeschaltet sind, während das Fahrzeug steht. Soll dieser Einsatz bei abgeschaltetem Fahrzeugtriebwerk durchgeführt werden, so wird eine elektrische Energieversorgungseinrichtung nach den bisherigen Energieversorgungskonzept sehr stark belastet. Mit dem neuen Energieversorgungskonzept kann diese Belastung stark herabgesetzt werden. Dadurch wird eine erhebliche Energieeinsparung infolge des Betriebes der Systeme ohne Laufen des Fahrzeugtriebwerks erreicht. Weiterhin wird die Einsatzfähigkeit des Gesamtsystems verbessert und die Fristenarbeiten im Fahrzeugbereich reduziert. Schließlich ist es leicht möglich neue Untersysteme, wie z.B. Kühlanlagen, Klimaanlagen, Führungssysteme, Bordcomputer, Fahrzeugsensorik, Prüf- und Überwachungssysteme einzubringen. Die Nachrüstung von nach den bisherigen Energieversorgungskonzept aufgebauten Fahrzeugen ist sinnvoll und ohne weiteres möglich.

Wie weiter unten anhand eines Ausführungsbeispiels näher erläutert, können durch die erfindungsgemäße elektrische Energieversorgungseinrichtung folgende Funktionen sichergestellt werden:
1. Laden der beiden Batteriesätze für Feinnetz und Grobnetz sowie Betrieb aller Energieverbraucher in der Betriebsart "Fahrzeugtriebwerk Ein";
2. Starten des Fahrzeugtriebwerks, ohne daß Rückwirkungen auf die elektrischen und elektronischen Verbraucher in deren Standardbetriebszuständen entstehen;
3. Laden der Batteriesätze für Feinnetz und Grobnetz sowie Betrieb der Energieverbraucher in der Betriebsart "Fahrzeugtriebwerk AUS - zusätzliche Antriebseinheit EIN" (Ausführungsform ab Anspruch 5);
4. Langzeitbetrieb des Fahrzeugs im Einsatzzustand "Beobachten" ohne Betrieb des Fahrzeugtriebwerkes (Ausführungsform ab Anspruch 5);
5. Optimierte Ladung der Fahrzeugbatteriesätze für Grobnetz und Feinnetz entweder vom Generator aus oder vom Zusatzgenerator aus (Ausführungsform ab Anspruch 5).

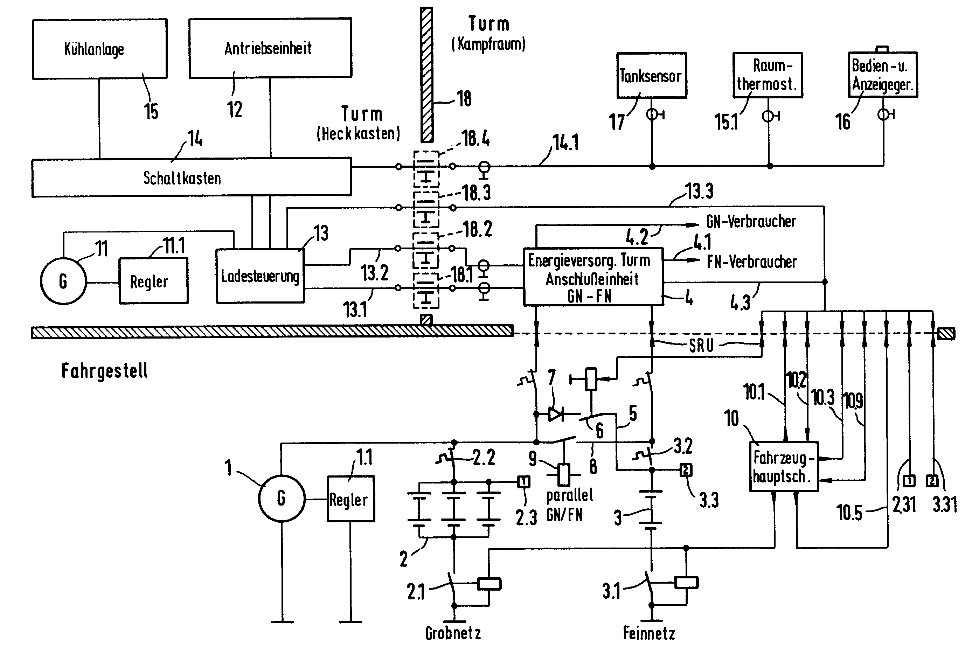

Im folgenden wird anhand der beigefügten Zeichnung ein Ausführungsbeispiel für eine elektrische Energieversorgungseinrichtung näher erläutert.

In der Zeichnung ist in einem stark schematisierten Blockschaltbild die elektrische Energieversorgungseinrichtung für einen Kampfpanzer dargestellt, von dem für die Erläuterung der Erfindung nur von Bedeutung ist, daß er ein Fahrgestell besitzt, auf dem ein in Azimut drehbarer Turm angeordnet ist, in dem ein besonders gesicherter Kampfraum vorhanden ist und der außerdem einen weniger gesicherten Heckkasten besitzt. Die elektrische Energieübertragung zwischen Fahrgestell und Turm erfolgt über Schleifringübertrager "SRÜ".

Im Fahrgestell befindet sich ein nicht dargestelltes Fahrzeugtriebwerk, das einen Generator 1 mit Regler 1.1 antreibt, der sowohl das aus Grobnetz GN und Feinnetz FN bestehende Bordnetz als auch zwei Batteriesätze 2 und 3 mit elektrischer Energie versorgt. Von den beiden Batteriesätzen ist der erste Batteriesatz 2 prinzipiell dem Grobnetz GN und der zweite Batteriesatz 3 dem Feinnetz FN zugeordnet. Im Turm ist eine Steuereinrichtung 4 vorhanden, über welche die GN-Verbraucher und die FN-Verbraucher mit der entsprechenden elektrischen Energie versorgt werden, die vom Generator 1 oder den Batteriesätzen 2 bzw. 3 kommend über die Schleifringübertrager SRÜ vom Fahrgestell in den Turm übertragen und dort verteilt wird. Die grundsätzlichen Ein/Ausschaltvorgänge der Anlage werden von einem im Fahrgestell angeordneten Fahrzeughauptschalter 10 aus vorgenommen. Über ansteuerbare Batterie-Hauptschalter 2.1 bzw. 3.1 in den Masseleitungen der Batteriesätze 2 und 3 werden diese grundsätzlich eingeschaltet. Sicherungsschalter 2.2 bzw. 3.2 überwachen die Batteriesätze im Hinblick auf die zu den Verbrauchern fließenden Höchstströme.

Beim Starten des Fahrzeugtriebwerks muß die hierfür notwendige elektrische Energie den Batteriesätzen entnommen werden. Damit hier an den Verbrauchern, insbesondere des Feinnetzes, kein Spannungsabfall auftritt, der zum Abschalten empfindlicher Geräte führt, wird durch eine entsprechende Steuerung sichergestellt, daß der zum Starten benötigte Strom nur dem ersten Batteriesatz 2 entnommen wird. Dies wird dadurch erreicht, daß der erste Batteriesatz 2 unmittelbar mit dem Generator 1 verbunden ist, während der zweite Batteriesatz 3 mit dem ersten Batteriesatz 2 über eine erste Verbindungsleitung 5 verbunden ist, die sowohl einen ansteuerbaren Trennschalter 6 als auch eine Diode 7 enthält, wobei letztere so geschaltet ist, daß sie den Stromfluß lediglich vom Generator 1 zum zweiten Batteriesatz 3 zuläßt. Beim Starten des Fahrzeugtriebwerkes wird der Trennschalter 6 geöffnet. Gleichzeitig kann die Steuereinrichtung 4 so ausgebildet sein, daß während des Startvorgangs Grobnetz GN und Feinnetz FN bei geöffnetem Trennschalter 6 nur aus dem zweiten Batteriesatz 3 mit elektrischer Energie versorgt werden. Da dieser durch den Startvorgang nicht belastet ist, tritt kein unerlaubter Spannungsabfall auf den beiden Netzen auf.

Soll in einer besonderen Situation ein sofortiger Start des Fahrzeugtriebwerks erfolgen, ohne daß hierbei auf die Verbraucher Rücksicht genommen werden muß, so ist es möglich, zum Start die beiden Batteriesätze 2 und 3 einzusetzen, indem der im Normalbetrieb offene Trennschalter 9, der in einer zweiten Verbindungsleitung 8 zwischen den beiden Batteriesätzen 2 und 3 liegt, geschlossen wird. In diesem Zustand sind die beiden Batteriesätze 2 und 3 parallel zueinander geschaltet und werden beim Startvorgang eingesetzt.

Im dargestellten Ausführungsbeispiel ist zur elektrischen Energieversorgung von Grobnetz GN und Feinnetz FN ein Zusatzgenerator 11 mit Regler 11.1 vorgesehen, der im Turm angeordnet ist, und zwar außerhalb des Kampfraums im Heckkasten des Turms. Der Zusatzgenerator 11 wird von einer zusätzlichen Antriebseinheit 12 angetrieben, die ebenfalls im Heckkasten des Turms angeordnet ist und beispielsweise als Dieselmotor ausgebildet sein kann. Es kann an dieser Stelle aber auch eine andere Antriebseinheit, beispielsweise eine Turbine, eine Brennstoffzelle oder dergleichen eingesetzt werden. Es ist weiterhin im Heckkasten des Turms eine als "Ladesteuerung" bezeichnete zusätzliche Steuereinrichtung 13 vorhanden, die in Funktion tritt, wenn von der zusätzlichen Antriebseinheit 12 aus der Zusatzgenerator 11 in Betrieb genommen wird. Die Antriebseinheit 12 ist an einen Schaltkasten 14 angeschlossen und kann bei eingeschaltetem Fahrzeughauptschalter 10 vom Bedien- und Anzeigegerät 16 aus in Betrieb genommen werden. Im stationären Betrieb des Fahrzeugs kann bei eingeschalteter Antriebseinheit 12 vom Generator 11 aus über eine Versorgungsleitung 13.1 und die als Anschlußeinheit wirkende erste Steuereinrichtung 4 das gesamte Bordnetz mit den GN-Verbrauchern und den FN-Verbrauchern mit elektrischer Energie versorgt werden und gleichzeitig können die beiden Batteriesätze 2 und 3 aufgeladen werden. Dabei muß durch entsprechende Auslegung der Steuereinrichtungen dafür gesorgt werden, daß die beiden Batteriesätze 2 und 3 entweder nur vom Hauptgenerator 1 oder nur vom Zusatzgenerator 11 aus versorgt werden. Wird das Fahrzeugtriebwerk gestartet, so wird der Zusatzgenerator 11 von den Batteriesätzen 2 und 3 abgetrennt oder ausgeschaltet.

Steuersignale werden vom Fahrzeughauptschalter 10 aus über eine Steuerleitung 4.3 der ersten Steuereinrichtung 4 und über eine zweite Steuerleitung 13.3 der zweiten Steuereinrichtung (Ladesteuerung) 13 zugeleitet, während von der zweiten Steuereinrichtung 2 zur ersten Steuereinrichtung 4 Steuersignale über eine Steuerleitung 13.2 laufen. Bei der Aufladung der Batteriesätze 2 und 3 vom Generator 11 über die zweite Steuereinrichtung 13 muß berücksichtigt werden, daß bei der Batterieaufladung außer dem Ladezustand der Batterien berücksichtigt werden muß, daß sich Ladesteuerung und Batteriesätze an ganz verschiedenen Orten im Fahrzeug befinden und somit unter Umständen sehr unterschiedliche Temperaturen aufweisen können. Um dies zu berücksichtigen, sind an den Batteriesätzen Sensoren 2.3 bzw. 3.3 zur Erfassung der Batteriespannung und der Temperatur angeordnet und deren Signale werden über Steuerleitungen 2.31 bzw. 3.31 zur Ladesteuerung 13 übertragen.

Im Turm (Heckkasten) sind an den Schaltkasten 14 einerseits eine Kühlanlage 15, und andererseits im Kampfraum ein Tanksensor 17 für den Tank der zusätzlichen Antriebseinheit 12, ein Raumthermostat 15.1 für die Kühlanlage 15 sowie das Bedien- und Anzeigegerät 16 über eine Leitung 14.1 angeschlossen. Die Kühlanlage 15 kann von der Antriebseinheit 12 aus entweder direkt über eine mechanische Kupplung oder elektronisch gekoppelt über den Generator 11 angetrieben werden.

Der Zusatzgenerator 11 kann auch so ausgeführt sein, daß er entweder im Standardbetrieb bei eingeschalteter Antriebseinheit 12 als Generator arbeitet, oder daß er in einer spezifischen Ansteuerung von einer im Schaltkasten 14 angeordneten Steuerschaltung aus bei ausgeschalteter Antriebseinheit 12 als Elektromotor betrieben wird, der vom Generator 1 aus über das Grobnetz mit elektrischer Energie versorgt wird. Somit kann die Kühlanlage 15 bei eingeschaltetem Generator 1 auch von dem als Elektromotor betriebenen Zusatzgenerator 11 aus angetrieben werden.

Der Kampfraum des Turmes ist vom Heckkasten durch eine Trennwand 18 getrennt, durch welche zahlreiche elektrische Leitungen, nämlich die Leitungen 13.1, 13.2, 13.3 und 14.1 geführt sind. Um hier jegliche Störeinflüsse von außen zu unterbinden, sind diese Leitungen durch entsprechende in der Trennwand 18 angeordnete Filtereinheiten 18.1, 18.2, 18.3 und 18.4 geführt.

Der Fahrzeughauptschalter ist über die Schleifringübertrager SRÜ mit den Steuereinrichtungen 4 und 13 des Turmes über Steuerleitungen verbunden. Die Leitung 10.1 gibt ein Steuersignal, das den Zustand anzeigt, in dem Grobnetz GN und Feinnetz FN parallel geschaltet sind; mit der Steuerleitung 10.2 wird bei eingeschaltetem Zusatzgenerator der Start des Fahrzeugtriebwerks freigegeben; die Leitung 10.3 übermittelt das Steuersignal für die Anwahl des Starts des Fahrzeugtriebwerks und die Leitung 10.4 übermittelt nach Ausschalten des Zusatzgenerators das Freigabesignal für den Start des Fahrzeugtriebwerks. Über die Steuerleitung 10.5 wird der jeweilige Zustand des Fahrzeughauptschalters an die Steuereinrichtungen abgegeben.

Die Steuerung der Batterieaufladung vom Zusatzgenerator 11 durch die Ladesteuerung 13 kann in der Weise erfolgen, daß in vorgegebenen Zeiträumen die beiden Batteriesätze 2 und 3 über die Sensoren 2.3 und 3.3 abgefragt werden und je nach ihrem Zustand vom Zusatzgenerator 11 aus aufgeladen werden. Es kann vorgesehen sein, daß, wenn diese Aufladung zur Sicherstellung der Aufladung nicht mehr ausreicht, ein Signal anzeigt, daß das Fahrzeugtriebwerk gestartet werden muß, so daß dann die Aufladung vom Generator 1 aus erfolgt.

## Patentansprüche

1. Elektrische Energieversorgungseinrichtung für ein militärisches Fahrzeug, insbesondere für einen mit einem Turm versehenen Panzer, mit einem einen Generator antreibenden Fahrzeugtriebwerk sowie mindestens einem Batteriesatz, wobei das Bordnetz des Fahrzeugs sowohl vom Generator her als auch vom Batteriesatz her mit elektrischer Energie versorgbar ist, und der Batteriesatz durch den Generator aufgeladen wird und das Bordnetz aus einem Grobnetz für höhere Strombelastung und einem Feinnetz für geringere Strombelastung aufgebaut ist, dadurch gekennzeichnet, daß mindestens zwei vom gleichen Generator (1) her aufladbare Batteriesätze (2, 3) vorhanden sind, von denen ein erster (2) dem Grobnetz (GN) und ein zweiter (3) dem Feinnetz (FN) zugeordnet ist, und mittels einer Steuereinrichtung (4) beim Starten des Fahrzeugtriebwerks der dem Feinnetz zugeordnete zweite Batteriesatz (3) von dem dem Grobnetz zugeordneten ersten Batteriesatz (2) für einen vorgegebenen Zeitraum derart abtrennbar ist, daß der Startvorgang allein aus dem dem Grobnetz zugeordneten ersten Batteriesatz (2) bewirkt wird.

2. Energieversorgungseinrichtung nach Anspruch 1, dadurch gekennzeichnet, daß die Steuereinrichtung (4) so ausgebildet ist, daß während des Startvorgangs Grobnetz (GN) und Feinnetz (FN) nur aus dem zweiten Batteriesatz (3) mit elektrischer Energie versorgt werden.

3. Energieversorgungseinrichtung nach Anspruch 1 oder 2, dadurch gekennzeichnet, daß der erste Batteriesatz (2) unmittelbar mit dem Generator (1) verbunden ist und die beiden Batteriesätze (2, 3) über eine erste, einen ansteuerbaren Trennschalter (6) enthaltende Verbindungsleitung (5) miteinander verbunden sind, in der eine den Stromfluß lediglich vom Generator (1) zum zweiten Batteriesatz (3) zulassende Diode (7) angeordnet ist.

4. Energieversorgungseinrichtung nach Anspruch 3, dadurch gekennzeichnet, daß die beiden Batteriesätze (2, 3) zusätzlich über eine einen ansteuerbaren Trennschalter (9) enthaltende, parallel zur ersten Verbindungsleitung (5) liegende zweite Verbindungsleitung (8) direkt miteinander verbindbar sind.

5. Energieversorgungseinrichtung nach einem der Ansprüche 1 bis 4, gekennzeichnet durch einen Zusatzgenerator (11), der von einer zusätzlichen Antriebseinheit (12) antreibbar ist, sowie eine zusätzliche Steuereinrichtung (13), mittels der das Grobnetz und das Feinnetz sowie der erste und zweite Batteriesatz (2, 3) an den Zusatzgenerator (11) anschließbar sind, wobei die Steuerung derart ist, daß beide Batteriesätze (2, 3) entweder nur vom Generator (1) oder nur vom Zusatzgenerator (11) aufgeladen werden.

6. Energieversorgungseinrichtung nach Anspruch 5, dadurch gekennzeichnet, daß die Steuerung derart ist, daß während eines Startvorgangs des Fahrzeugtriebwerks der Zusatzgenerator (11) von den Batteriesätzen (2, 3) abgetrennt oder ausgeschaltet wird.

7. Energieversorgungseinrichtung nach Anspruch 5 oder 6 bei einem mit einem Turm versehenen Panzer, bei welchem die Batteriesätze im Fahrgestell angeordnet sind und die elektrische Energie- und Signalübertragung zwischen Turm und Fahrgestell über Schleifringübertrager (SRÜ) erfolgt, dadurch gekennzeichnet, daß der Zusatzgenerator (11) und die zusätzliche Antriebseinheit (12) im Turm angeordnet sind, wobei die ebenfalls im Turm angeordnete zusätzliche Steuereinrichtung (13) die Aufladung der Batteriesätze (2, 3) in Abhängigkeit vom Ladezustand und der Temperatur der Batterien steuert.

8. Energieversorgungseinrichtung nach Anspruch 7, dadurch gekennzeichnet, daß der Zusatzgenerator (11), die zusätzliche Antriebseinheit (12) und die zusätzliche Steuereinrichtung (13) in einem vom Kampfraum des Turmes durch eine Trennwand (18) abgetrennten Heckkasten des Turmes angeordnet sind, wobei die Verbindungsleitungen (13.1, 13.2, 13,3, 14.1) zu den im Kampfraum des Turms angeordneten Einrichtungen über in der Trennwand (18) angeordnete Filtereinheiten (18.1 bis 18.4) geführt sind.

9. Energieversorgungseinrichtung nach Anspruch 7 oder 8, dadurch gekennzeichnet, daß im Turm eine Kühlanlage (15) angeordnet ist, die von der zusätzlichen Antriebseinheit (12) aus direkt oder elektronisch gekoppelt über den Zusatzgenerator (11) antreibbar ist.

10. Energieversorgungseinrichtung nach Anspruch 7 oder 8, dadurch gekennzeichnet, daß im Turm eine Kühlanlage (15) angeordnet ist und der Zusatzgenerator (11) so ausgeführt ist, daß er bei ausgeschalteter zusätzlicher Antriebseinheit (12) als Elektromotor betreibbar ist, der vom Generator (1) aus über das Grobnetz mit elektrischer Energie versorgt wird.
